# FASCICULE DE BREVET EUROPEEN

(11) **EP 4 569 262 B1**
(45) Date de publication et mention de la délivrance du brevet: **28.10.2026**
(21) Numéro de dépôt: 23745591.0
(22) Date de dépôt: 28.07.2023
(51) Int. Cl.: F21S 41/147, F21S 41/26, F21S 41/32, F21S 41/36, F21S 41/365, F21S 41/151, F21S 41/153, F21S 41/25, F21S 41/265, F21S 41/39, F21S 41/663, B60Q 1/00

(54) **PROJECTEUR Á COUPURE ET ÉTENDU VERTICALEMENT POUR VÉHICULE AUTOMOBILE**
SCHEINWERFER MIT VERTIKALER HELL-DUNKEL-GRENZE UND VERLÄNGERUNG FÜR EIN KRAFTFAHRZEUG
HEADLAMP HAVING A VERTICAL CUT-OFF AND EXTENSION FOR A MOTOR VEHICLE

(30) Priorité: 12.08.2022 FR 2208299
(43) Date de publication de la demande: 18.06.2025
(73) Titulaire: Valeo Vision, 93012 Bobigny Cedex (FR)
(72) Inventeur: GIRAUD, Sylvain, 49000 Angers (FR)
(74) Mandataire: Valeo Visibility
(86) Numéro de dépôt international: PCT/EP2023/071095
(87) Numéro de publication internationale: WO 2024/033122

(56) Documents cités:
- EP-A1- 2 019 256
- EP-A1- 3 351 849
- WO-A1-2020/025171
- WO-A1-2022/269006
- JP-A- 2010 067 427
- US-A1- 2022 107 070

## Description

### Domaine technique

L'invention a trait au domaine de l'éclairage, plus particulièrement de l'éclairage pour véhicule automobile.

### Technique antérieure

Le document de brevet publié WO 2020/025171 A1 divulgue des modules d'éclairage pour véhicules automobiles, comprenant une source lumineuse, un collecteur avec une surface réfléchis1sante en forme de calotte disposée en face de la source lumineuse, et une lentille de projection configurée pour imager la surface réfléchissante éclairée par la source lumineuse. A cet effet, la lentille de projection comprend un foyer disposé sur la surface réfléchissante, à proximité d'un bord arrière de la surface réfléchissante en question de manière à former une coupure horizontale nette en imageant le bord arrière. Ce document divulgue également un module d'éclairage comprenant plusieurs sous-modules tels que celui décrit ci-avant et disposés côte-à-côte et combinés les uns aux autres pour former un faisceau d'éclairage à coupure. Ce module d'éclairage est intéressant en ce qu'il permet de combiner plusieurs sous-faisceaux avec une lentille de projection commune. Toutefois, dans certaines configurations de véhicule automobile, la place disponible horizontalement pour le projecteur ne permet pas d'utiliser un tel module d'éclairage. En effet, dans certaines configurations de véhicule automobile, la place disponible suivant une direction verticale, ou inclinée par rapport à la verticale tout en restant majoritairement verticale, est plus importante que dans la direction horizontale.

### Exposé de l'invention

L'invention a pour objectif de pallier au moins un des inconvénients de l'état de la technique susmentionné. Plus particulièrement, l'invention a pour objectif de proposer un module d'éclairage, avantageusement à coupure, qui soit compact horizontalement.

L'invention a pour objet un module d'éclairage, notamment pour véhicule automobile, comprenant un axe optique ; un premier sous-module comprenant un premier moteur lumineux comprenant au moins une source lumineuse, un premier collecteur avec au moins une surface réfléchissante apte à réfléchir des rayons lumineux émis par l'au moins une source lumineuse du premier moteur lumineux en un premier faisceau lumineux réfléchi, et un premier dispositif optique apte à projeter le premier faisceau lumineux réfléchi en un premier faisceau lumineux projeté ; et un deuxième sous-module comprenant un deuxième moteur lumineux comprenant au moins une source lumineuse, un deuxième collecteur avec au moins une surface réfléchissante apte à réfléchir des rayons lumineux émis par l'au moins une source lumineuse du deuxième moteur lumineux en un deuxième faisceau lumineux réfléchi, et un deuxième dispositif optique apte à projeter le deuxième faisceau lumineux réfléchi en un deuxième faisceau lumineux projeté ; remarquable en ce que le dispositif d'éclairage comprend une platine présentant une inclinaison d'un angle α par rapport à un plan horizontal, autour d'un axe d'inclinaison qui est horizontal et perpendiculaire à l'axe optique ; les premier et deuxième moteurs lumineux sont disposés sur la platine, l'un derrière l'autre suivant une projection de l'axe optique sur la platine, et chacun des premier et deuxième dispositifs optiques comprend une lentille de projection et un miroir plan apte à renvoyer le premier ou deuxième faisceau lumineux réfléchi correspondant vers la lentille de projection correspondante.

Selon un mode avantageux de l'invention, les miroirs plans des premier et deuxième dispositifs optiques sont disposés sur la platine.

Selon un mode avantageux de l'invention, chacun des miroirs plans des premier et deuxième dispositifs optiques est parallèle à l'axe d'inclinaison.

Selon un mode avantageux de l'invention, chacun des miroirs plans des premier et deuxième dispositifs optiques présente une inclinaison d'un angle β par rapport à une direction perpendiculaire à un plan de la platine. Avantageusement, l'angle β est supérieur à 0° et/ou inférieur à 60°.

Selon un mode avantageux de l'invention, les lentilles des premier et deuxième dispositifs optiques s'étendent suivant une direction principale présentant une inclinaison d'un angle γ par rapport à la verticale. Avantageusement, l'angle γ est supérieur à 0° et/ou inférieur à 45°.

Selon un mode avantageux de l'invention, les lentilles des premier et deuxième dispositifs optiques sont adjacentes et alignées.

Selon un mode avantageux de l'invention, l'angle α d'inclinaison de la platine est supérieure à 0° et inférieur à 90°. Avantageusement, l'angle α est supérieur à 0° et/ou inférieur à 90°. Plus avantageusement, l'angle α est supérieur à 20°.

Selon un mode avantageux de l'invention, chacun des premier et deuxième dispositifs optiques est configuré pour imager une zone de l'au moins une surface réfléchissante du premier ou deuxième collecteur correspondant, ladite zone étant située à l'arrière de l'au moins une source lumineuse dudit premier ou deuxième collecteur. Par « arrière », on entend suivant une direction principale de propagation du premier ou deuxième faisceau lumineux réfléchi correspondant.

Selon un mode avantageux de l'invention, au moins un des premier et deuxième faisceaux lumineux projetés présente une coupure horizontale supérieure.

Selon un mode avantageux de l'invention, les au moins une source lumineuse des premier et deuxième moteurs lumineux sont disposées dans un même plan sur la platine. Avantageusement, les au moins une source lumineuse des premier et deuxième moteurs lumineux sont disposées sur une face avant de la platine.

Selon un mode avantageux de l'invention, chacune des au moins une surface réfléchissante des premier et deuxième collecteurs présente forme une calotte de profil elliptique ou parabolique dirigée vers la source lumineuse correspondante des au moins une source lumineuse des premier et deuxième moteurs lumineux.

Selon un mode avantageux de l'invention, le module d'éclairage comprenant un troisième sous-module comprenant un troisième moteur lumineux disposé sur la platine à l'arrière ou l'avant, suivant la projection de l'axe optique sur la platine, d'un des premier et deuxième moteurs lumineux et comprenant au moins une source lumineuse, un troisième collecteur avec au moins une surface réfléchissante apte à réfléchir des rayons lumineux émis par l'au moins une source lumineuse du troisième moteur lumineux en un troisième faisceau lumineux réfléchi, et un troisième dispositif optique apte à projeter le troisième faisceau lumineux réfléchi en un troisième faisceau projeté et comprenant une lentille de projection et un miroir plan apte à renvoyer le troisième faisceau lumineux réfléchi vers la lentille de projection du troisième dispositif optique.

Selon un mode avantageux de l'invention, les premier, deuxième et troisième moteurs lumineux sont alignés suivant une direction principale correspondant à une projection de l'axe optique sur la platine.

Selon un mode avantageux de l'invention, le module d'éclairage comprend un quatrième sous-module comprenant un quatrième moteur lumineux disposé sur la platine à l'arrière ou l'avant, suivant la projection de l'axe optique sur la platine, d'un des premier, deuxième et troisième moteurs lumineux et comprenant au moins une source lumineuse, un quatrième collecteur avec au moins une surface réfléchissante apte à réfléchir des rayons lumineux émis par l'au moins une source lumineuse du quatrième moteur lumineux en un quatrième faisceau lumineux réfléchi, et un quatrième dispositif optique apte à projeter le quatrième faisceau lumineux réfléchi en un quatrième faisceau projeté et comprenant une lentille de projection et un miroir plan apte à renvoyer le quatrième faisceau lumineux réfléchi vers la lentille de projection du quatrième dispositif optique.

Selon un mode avantageux de l'invention, le premier faisceau lumineux projeté, le deuxième faisceau lumineux projeté, le cas échéant, le troisième faisceau lumineux projeté et, le cas échéant, le quatrième faisceau lumineux projeté forment en combinaison un faisceau lumineux projeté global avec une coupure horizontale supérieure.

Selon l'invention, la source lumineuse peut être une diode électroluminescente, encore appelée DEL ou LED.

Les mesures de l'invention sont intéressantes en ce qu'elles permettent de réaliser un module d'éclairage performant avec un encombrement horizontal ou transversal limité. L'utilisation d'une platine commune pour les différents moteurs lumineux est particulièrement avantageuse en ce qu'elle simplifie la construction et les opérations d'assemblage du module d'éclairage. Aussi, les lentilles de projection peuvent être alignées suivant une direction principale, ce qui est particulièrement avantageux pour l'intégration du module d'éclairage dans la silhouette d'un véhicule automobile. Cette direction principale peut être inclinée par rapport à la verticale vers l'arrière et/ou latéralement. Cela est également particulièrement avantageux pour l'intégration du module d'éclairage dans la silhouette d'un véhicule automobile.

Au moins deux des lentilles de projection, notamment celle du premier dispositif de projection et celle du deuxième dispositif de projection peuvent être venues de matière en une seule pièce monobloc. Ceci est particulièrement avantageux pour l'assemblage, notamment quand les lentilles de projection sont alignées selon une direction principale, qui lorsque projetée sur la platine, est sensiblement parallèle à une direction principale d'alignement des collecteurs sur la platine.

Le côté de la platine portant les collecteurs et les sources lumineuses peut faire face à l'avant selon la direction d'émission du faisceau lumineux par ledit module, et de même les lentilles de projection, assemblées de manière monobloc ou non, peuvent être agencées devant la platine, leurs faces d'entrées étant orientées vers la platine et leurs faces de sortie orientées vers l'avant.

D'une manière générale, un autre objet de l'invention est un projecteur de véhicule automobile comprenant un module d'éclairage selon l'invention. En particulier, le projecteur peut comprendre un boitier fermé par une paroi de fermeture, le module d'éclairage étant agencé à l'intérieur du boitier de manière à ce que les faisceaux lumineux projetés soient émis au travers de la paroi de fermeture.

### Brève description des dessins

[Fig 1] est une vue en perspective et une vue de face des éléments principaux d'un module d'éclairage suivant un premier mode de réalisation ;
[Fig 2] est une vue de profil du module d'éclairage de la figure 1 ;
[Fig 3] est une illustration graphique de l'image du faisceau lumineux produit par le module d'éclairage des figures 1 et 2 ;
[Fig 4] est une vue de profil d'un des sous-modules d'éclairage du module d'éclairage des figures 1 et 2, illustrant le principe de l'invention ;
[Fig 5] est une vue en perspective et une vue de face des éléments principaux d'un module d'éclairage suivant un deuxième mode de réalisation ;
[Fig 6] est une illustration graphique de l'image du faisceau lumineux produit par le module d'éclairage de la figure 5 ;
[Fig 7] est une vue en perspective et une vue de face des éléments principaux d'un module d'éclairage suivant un troisième mode de réalisation ;
[Fig 8] est une vue de profil du module d'éclairage de la figure 7 ;
[Fig 9] est une illustration graphique de l'image du faisceau lumineux produit par le module d'éclairage des figures 7 et 8.

### Description détaillée

Dans la description qui va suivre, les orientations exprimées notamment par les termes « vertical », « horizontal », « longitudinal », incluant les formes au féminin et au pluriel, ainsi que par les termes relatifs tels que « au-dessus », « en-dessous », « avant » et « arrière », font référence à une orientation du ou des modules d'éclairage dans une position de montage et opérationnelle sur un véhicule automobile, telle qu'illustrée aux figures.

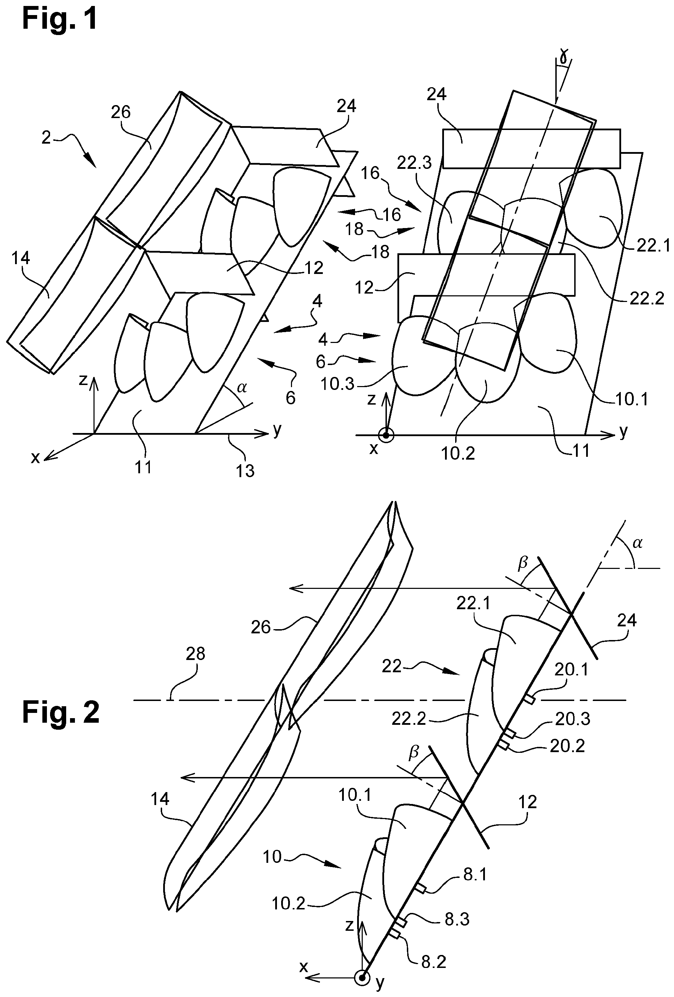

Les figures 1 à 3 illustrent un module d'éclairage selon un premier mode de réalisation de l'invention.

La figure 1 comprend une vue en perspective et une vue de face d'un module d'éclairage selon le premier mode de réalisation de l'invention.

La figure 2 est une vue de profil du module d'éclairage de la figure 1.

Les figures 1 et 2 sont décrites ci-après en combinaison.

Le module d'éclairage 2 comprend un premier sous-module d'éclairage 4 consistant essentiellement en un premier moteur lumineux 6 configuré pour produire un premier faisceau lumineux réfléchi et en un premier dispositif optique 12 et 14 configuré pour projeter le premier faisceau lumineux réfléchi en un premier faisceau lumineux projeté.

Le premier moteur lumineux 6 comprend des sources lumineuses 8.1, 8.2 et 8.3, et un collecteur 10 pourvu de surfaces réfléchissantes 10.1, 10.2 et 10.3 disposées côte-à-côte et formant chacune une cavité ouverte dirigée vers la source lumineuse correspondantes des sources lumineuses 8.1, 8.2 et 8.3. Avantageusement, une source lumineuse spécifique est associée à chaque surface réfléchissante. En l'occurrence la surface réfléchissante 10.1 est disposée en face de la source lumineuse 8.1, la surface réfléchissante 10.2 en face de la source lumineuse 8.2 et la surface réfléchissante 10.3 en face de la source lumineuse 8.3. Il est entendu que le nombre de couple source lumineuse-surface réfléchissante peut être différent de trois, il peut être d'un, deux, quatre ou plus encore. Les sources lumineuses 8.1, 8.2 et 8.3 sont du type diode à électroluminescence et éclairent chacune dans un espace délimité par un plan et dans une direction principale perpendiculaire audit plan. Les rayons lumineux émis par les sources lumineuses 8.1, 8.2 et 8.3 sont collectés par les surfaces réfléchissantes 10.1, 10.2 et 10.3, et sont réfléchis vers le premier dispositif optique 12 et 14.

Le premier dispositif optique comprend un miroir plan 12 et une lentille de projection 14. Le miroir plan 12 est disposé en face du premier moteur lumineux 6 de manière à recevoir ses rayons et à les réfléchir vers la lentille de projection 14. La nature plane du miroir plan 12 a pour effet de ne pas modifier optiquement les faisceaux lumineux émis par le premier moteur lumineux 6. La lentille de projection 14 a une ligne ou courbe de foyer virtuel imagée par le miroir plan 12 passant par les surfaces réfléchissantes 10.1, 10.2 et 10.3, de sorte à imager les surfaces réfléchissantes en question éclairées par les sources lumineuses 8.1, 8.2 et 8.3. De manière préférentielle, la ligne ou courbe de foyer virtuel est située sur une partie arrière (par rapport à la direction principale de propagation du faisceau lumineux réfléchi vers le miroir plan 12) des surfaces réfléchissantes 10.1, 10.2 et 10.3, plus préférentiellement encore entre les sources 8.1, 8.2 et 8.3 et les bords arrière des surfaces réfléchissantes 10.1, 10.2 et 10.3. Une telle configuration permet de produire un faisceau lumineux projeté avec une coupure horizontale nette en imageant les bords arrière en question.

Le module d'éclairage 2 comprend, en outre, un deuxième sous-module d'éclairage 16 consistant essentiellement en un deuxième moteur lumineux 18 configuré pour produire un deuxième faisceau lumineux réfléchi, et en un deuxième dispositif optique 24 et 26 configuré pour projeter le deuxième faisceau lumineux réfléchi en un deuxième faisceau lumineux projeté, de manière similaire au premier sous-module d'éclairage 4 tel que décrit ci-avant. Le deuxième collecteur 22 comprend les surfaces réfléchissantes 22.1 22.2 et 22.3 en forme de cavités ouvertes dirigées vers les sources lumineuses correspondantes 20.1, 20.2 et 20.3. Il est fait référence à cette description du premier sous-module d'éclairage 4.

On peut observer que les premier et deuxième sous-modules d'éclairage 6 et 18 sont disposés sur une platine 11 inclinée d'un angle α autour d'un axe d'inclinaison 13. Ce dernier est horizontal et transversal au véhicule automobile lorsque le module d'éclairage est en position de montage et opérationnel sur le véhicule automobile.

L'axe d'inclinaison 13 correspond à l'axe y du repère cartésien x-y-z. L'axe x est parallèle à l'axe optique 28 du module d'éclairage 2 ainsi qu'à l'axe longitudinal du véhicule automobile lorsque le lorsque le module d'éclairage est en position de montage et opérationnel sur le véhicule automobile. Dans ces conditions, l'axe y est horizontal et l'axe z est vertical. L'inclinaison d'un angle α de la platine 11 est supérieure à 0° et inférieur à 90°. Dans le ce premier mode de réalisation, l'angle α est de 60°, étant toutefois entendu que cette inclinaison peut être plus faible ou encore plus grande encore, en fonction notamment de l'espace disponible sur le véhicule automobile pour loger le module d'éclairage.

On peut également observer que les premier et deuxième sous-modules d'éclairage 6 et 18 sont disposés sur la platine 11 l'un derrière l'autre suivant une projection de l'axe optique 28 sur la platine 11, c'est-dire suivant l'intersection d'un plan longitudinal vertical avec la platine 11. Cette disposition sur la platine 11 combinée à son inclinaison α et à la présence des miroirs plans 12 et 24 sur la platine 11 permet de produire les premier et deuxième faisceaux lumineux projeté superposés verticalement et s'additionnant pour former un faisceau lumineux projeté total du module d'éclairage 2.

On peut également observer que les lentilles de projection 14 et 26 des premier et deuxième dispositifs optiques des premier et deuxième sous-modules d'éclairage 4 et 16 sont alignées de manière à s'étendre suivant une étendue commune parallèle à la platine 11 ou inclinée par rapport à ladite platine 11 d'un angle faible, inférieur à 20°. En référence à la vue de face (vue de droite) de la figure 1, les lentilles de projection 14 et 26 s'étendent suivant une direction principale, illustrée par un trait d'axe, inclinée d'un angle γ par rapport à un plan vertical longitudinal dans une projection horizontale de ladite direction principale, et aussi par rapport à l'axe optique 28 (figure 2) dans une projection verticale de ladite direction principale. Dans ce premier mode de réalisation, l'angle γ est de 20°. Il est avantageusement supérieur à 0° et inférieur à 45°. Cette inclinaison est avantageuse en ce qu'elle favorise l'intégration du module d'éclairage 2 dans le véhicule automobile où l'espace réservé pour le module d'éclairage peut présenter, du moins en surface extérieure du véhicule automobile, une telle inclinaison, notamment pour des raisons de style dudit véhicule automobile. L'inclinaison de la direction principale des lentilles de projection 14 et 26 est rendue possible par un décalage correspondant des sous-modules d'éclairage 4 et 16, en particulier des premier et deuxième moteurs lumineux 6 et 18 et des miroirs plans 12 et 24 suivant l'axe d'inclinaison 13 ou l'axe y.

Les miroirs plans 12 et 24 sont parallèles à l'axe d'inclinaison 13 et, partant, à la direction y. Ils forment chacun une inclinaison d'un angle β par rapport à une direction perpendiculaire à la platine 11. Dans ce premier mode de réalisation, l'angle β est de l'ordre de 30°. Il est avantageusement supérieur à 0° et inférieur à 60°. L'angle β est d'autant plus grand que l'angle α est grand et inversement.

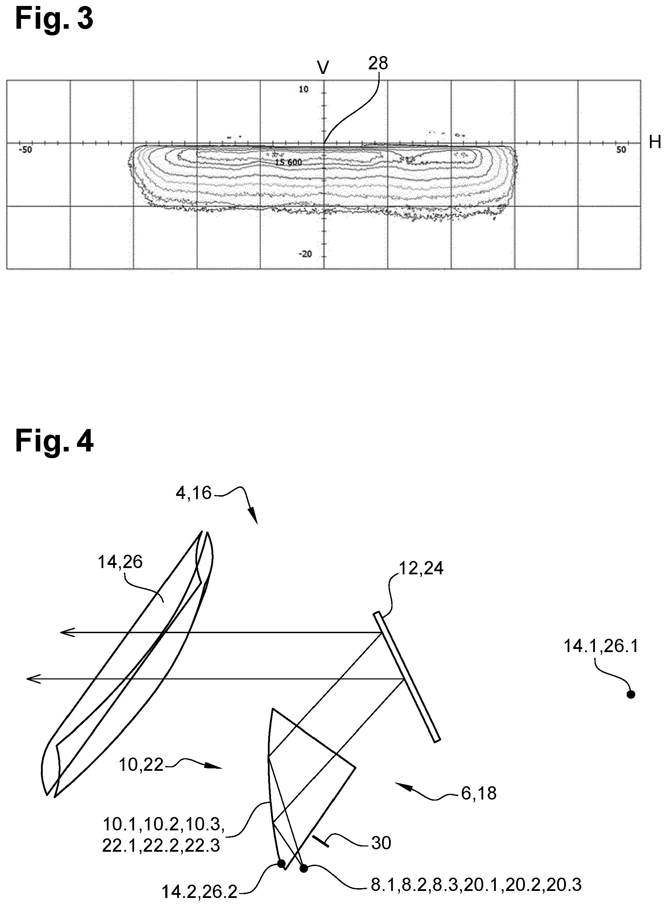

La figure 3 illustre le faisceau lumineux projeté total du module d'éclairage 2, formé par la superposition des premier et deuxième faisceaux lumineux projetés des premier et deuxièmes sous-modules d'éclairage 4 et 16 (figures 1 et 2). Les courbes sont des courbes de même éclairement lumineux (isolux) suivant un repère cartésien H-V où H est un axe horizontal et V un axe verticale, l'axe optique 28 du module d'éclairage passant par l'intersection desdits axes H et V. On observe que le faisceau lumineux global présente un coupure supérieure horizontale légèrement sous l'axe H. Il peut ainsi s'agir d'une fonction d'éclairage automobile à coupure couramment désignée « code » (ou « low-beam » en anglais).

La figure 4 illustre le principe de fonctionnement de chacun des deux sous-modules d'éclairage 4 et 16 du module d'éclairage 2 des figures 1 et 2.

A des fins de clarté d'exposé, une seule surface réfléchissante 10.1, 10.2, 10.3, 22.1, 22.2 ou 22.3 en forme de cavité ouverte est représentée. Aussi, une seule source lumineuse 8.1, 8.2, 8.3, 20.1, 20.2 ou 20.3, associée à la surface réfléchissante représentée, est représentée.

La lentille de projection 14 ou 26 présente un foyer 14.1 ou 26.1 situé à l'arrière du miroir plan 12 ou 24. Par l'effet du miroir plan 12 ou 24 la lentille de projection 14 ou 26 présente un foyer virtuel 14.2 ou 26.2 situé sur la surface réfléchissante 10.1, 10.2, 10.3, 22.1, 22.2 ou 22.3, avantageusement à un bord arrière de ladite surface réfléchissante. La lentille de projection 14 ou 26 est par conséquent configurée pour imager la surface réfléchissante éclairée par la source lumineuse associée, en particulier la portion de la surface réfléchissante en question où se situe le foyer virtuel 14.2 ou 26.2.

La surface réfléchissante 10.1, 10.2, 10.3, 22.1, 22.2 ou 22.3 présente avantageusement un profil du type elliptique ou parabolique. Elle est avantageusement une surface de révolution autour d'un axe parallèle à un axe optique du moteur lumineux 6 ou 18. Alternativement, il peut s'agir d'une surface de forme libre (en langue anglaise « free form ») ou une surface balayée ou une surface asymétrique. Elle peut aussi être multiple de manière à comporter plusieurs secteurs. Le collecteur 10 ou 22 en forme de coque ou de calotte est avantageusement réalisé dans des matériaux présentant une bonne tenue à la chaleur, par exemple du verre ou des polymères synthétiques comme du polycarbonate PC ou du polyétherimide PEI. L'expression « type parabolique » s'applique de manière générale à des réflecteurs dont la surface présente un seul foyer, c'est-à-dire une zone de convergence des rayons lumineux telle que les rayons lumineux émis par une source lumineuse placée au niveau de cette zone de convergence sont projetés à grande distance après réflexion sur la surface. Projeté à grande distance signifie que ces rayons lumineux ne convergent pas vers une zone située à au moins 10 fois les dimensions du réflecteur. Autrement dit les rayons réfléchis ne convergent pas vers une zone de convergence ou, s'ils convergent, cette zone de convergence est située à une distance supérieure ou égale à 10 fois les dimensions du réflecteur. Une surface de type parabolique peut donc présenter ou non des portions paraboliques. Un réflecteur présentant une telle surface est généralement utilisé seul pour créer un faisceau lumineux. Alternativement il peut être utilisé comme surface de projection associée à un réflecteur de type elliptique. Dans ce cas, la source lumineuse du réflecteur de type parabolique est la zone de convergence des rayons réfléchis par le réflecteur de type elliptique.

La source lumineuse 8.1, 8.2, 8.3, 20.1, 20.2 ou 20.3 est disposée à un foyer de la surface réfléchissante de manière à ce que ses rayons soient collectés et réfléchis suivant l'axe optique du moteur lumineux 6 ou 18. Au moins une partie de ces rayons réfléchis présentent des angles d'inclinaison dans un plan vertical par rapport audit axe qui sont inférieurs ou égaux à 25°, de préférence inférieurs ou égaux à 10°, de manière à être dans les conditions dites de Gauss, permettant d'obtenir un stigmatisme, c'est-à-dire une netteté de l'image projetée. Il s'agit avantageusement des rayons réfléchis par la partie arrière de la surface réfléchissante.

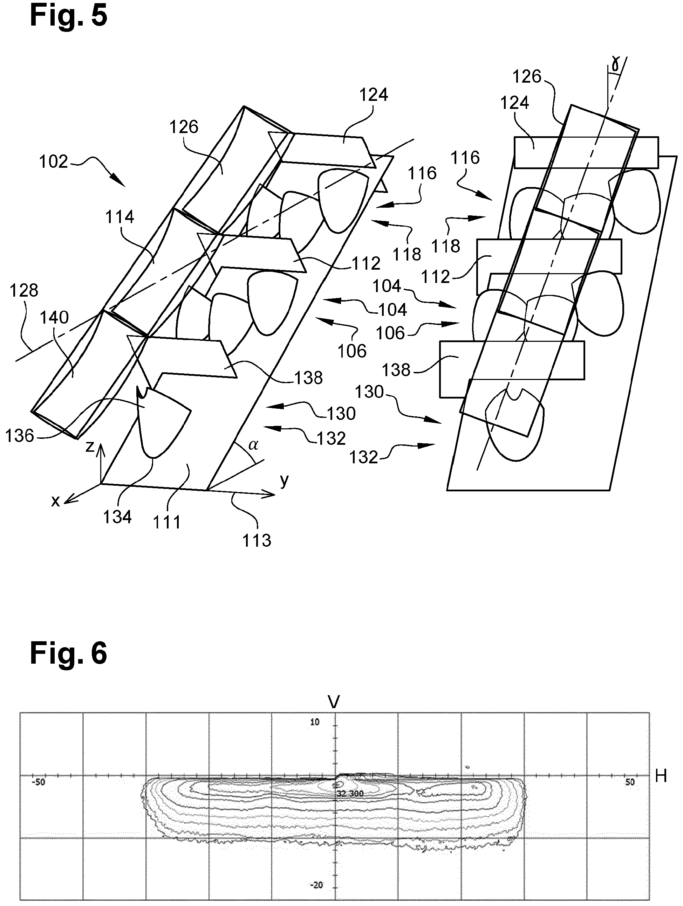

Les figures 5 et 6 illustrent un module d'éclairage selon un deuxième mode de réalisation de l'invention. Les numéros de référence du premier mode de réalisation sont utilisés pour désigner les éléments identiques ou similaires, ces numéros étant toutefois majorés de 100. Il est également fait référence à la description de ces éléments dans le premier mode de réalisation. Des numéros spécifiques, compris entre 100 et 200 sont utilisés pour désigner les éléments spécifiques à ce mode de réalisation.

Le module d'éclairage 102 du deuxième mode de réalisation se distingue de celui du premier mode de réalisation essentiellement en ce qu'il comprend un troisième sous-module d'éclairage 130 comprenant un troisième moteur lumineux 132 et un troisième dispositif optique 138 et 140. Le troisième moteur lumineux 132 comprend en l'occurrence une seule source lumineuse 134 et un collecteur avec une seule surface réfléchissante 136 en forme de cavité ouverte dirigée vers la source lumineuse 134. Le troisième dispositif optique est similaire au premier et deuxième dispositifs optiques 112, 114 et 124, 126. Il est configuré pour imager la surface réfléchissante 136 éclairée par la source lumineuse 134 et former un troisième faisceau lumineux projeté. Ce dernier est particulier en ce qu'il est moins étendu horizontalement et verticalement que les premier et deuxième faisceaux lumineux projeté. Cet étalement horizontal réduit est obtenu en n'utilisant qu'une seule surface réfléchissante alors que chacun des premier et deuxième faisceaux lumineux projetés utilise trois surfaces réfléchissantes disposées côte-à-côte. L'étalement vertical réduit est obtenu en prévoyant une découpe au bord avant de la surface réfléchissante 136 du collecteur du troisième moteur lumineux 132. Aussi, le bord arrière présente un ressaut (non visible) dont l'image projetée par la lentille de projection 140 forme une coupure horizontale supérieure avec un ressaut correspondant.

La figure 6 illustre le faisceau lumineux projeté total du module d'éclairage 102, formé par la superposition des premier, deuxième et troisième faisceaux lumineux projetés des premier, deuxièmes et troisièmes sous-modules d'éclairage 104, 116 et 130 (figure 5). Les courbes sont des courbes de même éclairement lumineux (isolux) suivant un repère cartésien H-V où H est un axe horizontal et V un axe vertical, l'axe optique du module d'éclairage passant par l'intersection desdits axes H et V.

La coupure horizontale avec ressaut à l'intersection des axes H et V, formée par le troisième sous-module d'éclairage 130 tel que détaillé ci-avant, est bien visible. Ce ressaut est centré sur l'axe optique du module d'éclairage 102.

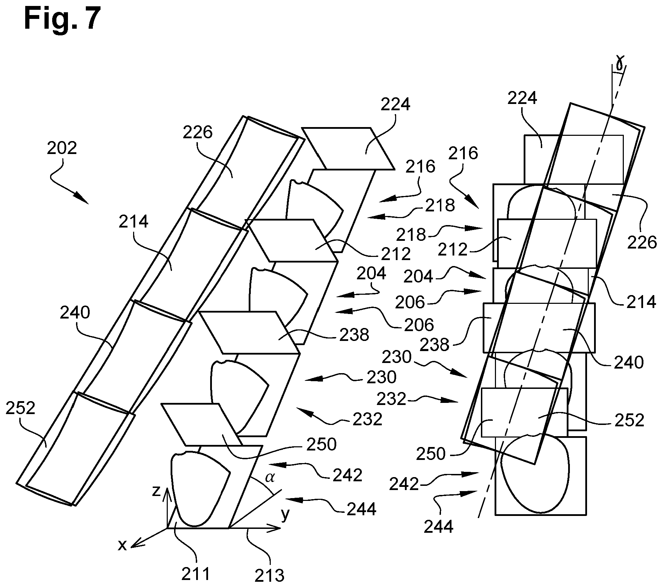

Les figures 7 à 9 illustrent un module d'éclairage selon un troisième mode de réalisation de l'invention. Les numéros de référence du deuxième mode de réalisation sont utilisés pour désigner les éléments identiques ou similaires, ces numéros étant toutefois majorés de 100. Il est également fait référence à la description de ces éléments dans le premier et le deuxième mode de réalisation. Des numéros spécifiques, compris entre 200 et 300 sont utilisés pour désigner les éléments spécifiques à ce mode de réalisation.

La figure 7 comprend une vue en perspective et une vue de face d'un module d'éclairage selon le premier mode de réalisation de l'invention.

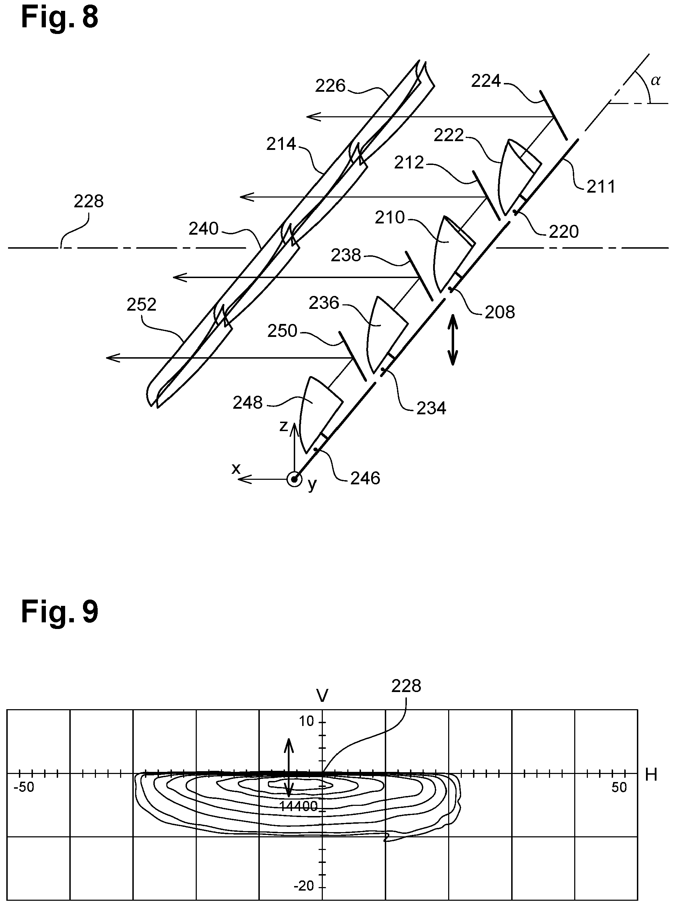

La figure 8 est une vue de profil du module d'éclairage de la figure 7.

Les figures 7 et 8 sont décrites ci-après en combinaison.

Le module d'éclairage 202 du deuxième mode de réalisation se distingue de celui du premier mode de réalisation essentiellement en ce qu'il comprend un quatrième sous-module d'éclairage 242 comprenant un quatrième moteur lumineux 244 et un quatrième dispositif optique 250 et 252. Aussi, le collecteur de chacun des premier, deuxième, troisième et quatrième moteurs lumineux 206, 218, 232, 244 comprend une seule surface réfléchissante 210, 222, 236 et 248. Similairement, chacun des premier, deuxième, troisième et quatrième moteurs lumineux 206, 218, 232, 244 comprend une seule source lumineuse 208, 220, 234 et 246.

La figure 9 illustre le faisceau lumineux projeté total du module d'éclairage 202, formé par la superposition des premier, deuxième, troisième et quatrième faisceaux lumineux projetés des premier, deuxièmes, troisièmes et quatrième sous-modules d'éclairage 204, 216, 230 et 242 (figure 7). Les courbes sont des courbes de même éclairement lumineux (isolux) suivant un repère cartésien H-V où H est un axe horizontal et V un axe vertical, l'axe optique du module d'éclairage passant par l'intersection desdits axes H et V. Une coupure horizontale sans ressaut à l'intersection des axes H et V, y est bien visible.

En relation avec les figures 8 et 9, il est à noter qu'un déplacement généralement vertical de la platine 211, équipée des premier, deuxième, troisième et quatrième sous-modules d'éclairage, par rapport aux lentilles de projection permet de déplacer verticalement le faisceau lumineux projeté total du module d'éclairage 202, c'est-à-dire suivant l'axe V à la figure 9. Un déplacement vers le haut de la platine 211 avec les sous-modules d'éclairage par rapport aux lentilles de projection 214, 226, 240 et 252 va déplacer le faisceau lumineux projeté total également vers le haut, et vice versa.

Ces déplacements sont schématisés par une flèche verticale à double sens à chacune des figures 8 et 9.

Il est à noter que ce phénomène s'applique également aux autres modes de réalisation.

## Revendications

1. Module d'éclairage (2 ; 102 ; 202) pour véhicule automobile, ledit module d'éclairage comprenant :
un axe optique (28 ; 128 ; 228) ;
un premier sous-module (4 ; 104 ; 204) comprenant :
- un premier moteur lumineux (6 ; 106 ; 206) comprenant au moins une source lumineuse (8.1, 8.2, 8.3 ; 208), un premier collecteur (10 ; 210) avec au moins une surface réfléchissante (10.1, 10.2, 10.3) ; apte à réfléchir des rayons lumineux émis par l'au moins une source lumineuse (8.1, 8.2, 8.3 ; 208) du premier moteur lumineux (6 ; 106 ; 206) en un premier faisceau lumineux réfléchi, et
- un premier dispositif optique (12, 14 ; 112, 114 ; 212, 214) apte à projeter le premier faisceau lumineux réfléchi en un premier faisceau lumineux projeté ; et
un deuxième sous-module (16 ; 216 ; 316) comprenant
- un deuxième moteur lumineux (18 ; 118 ; 218) comprenant au moins une source lumineuse (20.1, 20.2, 20.3 ; 220), un deuxième collecteur (22 ; 222) avec au moins une surface réfléchissante (22.1, 22.2, 22.3) apte à réfléchir des rayons lumineux émis par l'au moins une source lumineuse (20.1, 20.2, 20.3 ; 220) du deuxième moteur lumineux (16 ; 216 ; 316) en un deuxième faisceau lumineux réfléchi, et
- un deuxième dispositif optique (24, 26 ; 124, 126 ; 224, 226) apte à projeter le deuxième faisceau lumineux réfléchi en un deuxième faisceau lumineux projeté;
**caractérisé en ce que**
le module d'éclairage (2 ; 102 ; 202) comprend une platine (11 ; 111 ; 211) présentant une inclinaison d'un angle α par rapport à un plan horizontal,
autour d'un axe d'inclinaison (13 ; 113 ; 213) qui est horizontal et perpendiculaire à l'axe optique (28 ; 128 ; 228);
les premier et deuxième moteurs lumineux (6, 18 ; 106 ; 118 ; 206 ; 218) sont disposés sur la platine (11 ; 111 ; 211), l'un derrière l'autre suivant une projection de l'axe optique (28 ; 128 ; 228) sur la platine (11 ; 111 ; 211), et chacun des premier et deuxième dispositifs optiques comprend une lentille de projection (14, 26 ; 114, 126 ; 214, 226) et un miroir plan (12, 24 ; 112, 224 ; 212, 224) apte à renvoyer le premier ou deuxième faisceau lumineux réfléchi correspondant vers la lentille de projection correspondante (14, 26 ; 114, 126 ; 214, 226).

2. Module d'éclairage (2 ; 102 ; 202) selon la revendication 1, dans lequel les miroirs plans (12, 24 ; 112, 224 ; 212, 224) des premier et deuxième dispositifs optiques (12, 14 ; 24, 26 ; 112, 114 ; 124, 126 ; 212, 214 ; 224, 226) sont disposés sur la platine (11 ; 111 ; 211).

3. Module d'éclairage (2 ; 102 ; 202) selon l'une des revendications 1 et 2, dans lequel chacun des miroirs plans (12, 24 ; 112, 224 ; 212, 224) des premier et deuxième dispositifs optiques (12, 14 ; 24, 26 ; 112, 114 ; 124, 126 ; 212, 214 ; 224, 226) est parallèle à l'axe d'inclinaison (13 ; 113 ; 213).

4. Module d'éclairage (2 ; 102 ; 202) selon l'une des revendications 1 à 3, dans lequel chacun des miroirs plans (12, 24 ; 112, 224 ; 212, 224) des premier et deuxième dispositifs optiques (12, 14 ; 24, 26 ; 112, 114 ; 124, 126 ; 212, 214 ; 224, 226) présente une inclinaison d'un angle β par rapport à une direction perpendiculaire à un plan de la platine (11 ; 111 ; 211).

5. Module d'éclairage (2 ; 102 ; 202) selon l'une des revendications 1 à 4, dans lequel les lentilles de projection (14 ; 26 ; 114, 126 ; 214, 226) des premier et deuxième dispositifs optiques (12, 14 ; 24, 26 ; 112, 114 ; 124, 126 ; 212, 214 ; 224, 226) s'étendent suivant une direction principale présentant une inclinaison d'un angle γ par rapport à la verticale (28 ; 128 ; 228).

6. Module d'éclairage (2 ; 102 ; 202) selon l'une des revendications 1 à 5, dans lequel les lentilles de projection (14 ; 26 ; 114, 126 ; 214, 226) des premier et deuxième dispositifs optiques (12, 14 ; 24, 26 ; 112, 114 ; 124, 126 ; 212, 214 ; 224, 226) sont adjacentes et alignées.

7. Module d'éclairage (2 ; 102 ; 202) selon l'une des revendications 1 à 6, dans lequel l'angle α d'inclinaison de la platine (11 ; 111 ; 211) est supérieure à 0° et inférieur à 90°.

8. Module d'éclairage (2 ; 102 ; 202) selon l'une des revendications 1 à 7, dans lequel chacun des premier et deuxième dispositifs optiques (12, 14 ; 24, 26 ; 112, 114 ; 124, 126 ; 212, 214 ; 224, 226) est configuré pour imager une zone de l'au moins une surface réfléchissante (10.1, 10.2, 10.3, 22.1, 22.2, 22.3) du premier ou deuxième collecteur correspondant (10, 22), ladite zone étant située à l'arrière de l'au moins une source lumineuse (8.1, 8.2, 8.3, 20.1, 20.2, 20.3) dudit premier ou deuxième collecteur.

9. Module d'éclairage (2 ; 102 ; 202) selon l'une des revendications 1 à 8, dans lequel au moins un des premier et deuxième faisceaux projetés présente une coupure horizontale supérieure.

10. Module d'éclairage (2 ; 102 ; 202) selon l'une des revendications 1 à 9, dans lequel les au moins une source lumineuse (8.1, 8.2, 8.3, 20.1, 20.2, 20.3 ; 208, 220) des premier et deuxième moteurs lumineux (6, 18 ; 206, 218) sont disposées dans un même plan sur la platine (11 ; 111 ; 211).

11. Module d'éclairage (102 ; 202) selon l'une des revendications 1 à 10, comprenant un troisième sous-module (130 ; 230) comprenant
- un troisième moteur lumineux (132 ; 232) disposé sur la platine (111 ; 211) à l'arrière ou l'avant, suivant la projection de l'axe optique (128 ; 228) sur la platine (111 ; 211), d'un des premier et deuxième moteurs lumineux (106, 118 ; 206, 218) et comprenant au moins une source lumineuse (134 ; 234), un troisième collecteur avec au moins une surface réfléchissante (136 ; 236) apte à réfléchir des rayons lumineux émis par l'au moins une source lumineuse (134 ; 234) du troisième moteur lumineux (132 ; 232) en un troisième faisceau lumineux réfléchi, et
- un troisième dispositif optique (138, 140 ; 238, 240) apte à projeter le troisième faisceau lumineux réfléchi en un troisième faisceau projeté et comprenant une lentille de projection (140 ; 240) et un miroir plan (138 ; 238) apte à renvoyer le troisième faisceau lumineux réfléchi vers la lentille de projection (140 ; 240) du troisième dispositif optique (138, 140 ; 238, 240).

12. Module d'éclairage (102 ; 202) selon la revendication 11, dans lequel les premier, deuxième et troisième moteurs lumineux (106, 118, 132 ; 206 ; 218 ; 232) sont alignés suivant une direction principale correspondant à une projection de l'axe optique (128 ; 228) sur la platine (111 ; 211).

13. Module d'éclairage (202) selon l'une des revendications 11 et 12, comprenant un quatrième sous-module (242) comprenant
- un quatrième moteur lumineux (244) disposé sur la platine (211) à l'arrière ou l'avant, suivant la projection de l'axe optique (228) sur la platine (211), d'un des premier, deuxième et troisième moteurs lumineux (206, 218, 232) et comprenant au moins une source lumineuse (246), un quatrième collecteur (248) avec au moins une surface réfléchissante apte à réfléchir des rayons lumineux émis par l'au moins une source lumineuse (246) du quatrième moteur lumineux (244) en un quatrième faisceau lumineux réfléchi, et
- un quatrième dispositif optique (250, 252) apte à projeter le quatrième faisceau lumineux réfléchi en un quatrième faisceau projeté et comprenant une lentille de projection (252) et un miroir plan (250) apte à renvoyer le quatrième faisceau lumineux réfléchi vers la lentille de projection (252) du quatrième dispositif optique (250, 252).

14. Module d'éclairage (2 ; 102 ; 202) selon l'une des revendications 1 à 13, dans lequel le premier faisceau lumineux projeté, le deuxième faisceau lumineux projeté, le cas échéant, le troisième faisceau lumineux projeté et, le cas échéant, le quatrième faisceau lumineux projeté forment en combinaison un faisceau lumineux projeté global avec une coupure horizontale supérieure.

15. Projecteur de véhicule automobile comprenant un module d'éclairage (2 ; 102 ; 202) selon l'une des revendications précédentes.

## Patentansprüche

1. Beleuchtungsmodul (2; 102; 202) für ein Kraftfahrzeug, wobei das Beleuchtungsmodul umfasst:
eine optische Achse (28; 128; 228);
ein erstes Teilmodul (4; 104; 204) umfassend:
- einen ersten Lichtmotor (6; 106; 206) umfassend mindestens eine Lichtquelle (8.1, 8.2, 8.3; 208), einen ersten Kollektor (10; 210) mit mindestens einer Reflexionsfläche (10.1, 10.2, 10.3), die geeignet ist, von der mindestens einen Lichtquelle (8.1, 8.2, 8.3; 208) des ersten Lichtmotors (6; 106; 206) emittierte Lichtstrahlen in einen ersten reflektierten Lichtstrahl zu reflektieren, und
- eine erste optische Vorrichtung (12, 14; 112, 114; 212, 214), die geeignet ist, den ersten reflektierten Lichtstrahl in einen ersten projizierten Lichtstrahl zu projizieren; und
ein zweites Teilmodul (16; 216; 316) umfassend
- einen zweiten Lichtmotor (18; 118; 218) umfassend mindestens eine Lichtquelle (20.1, 20.2, 20.3; 220), einen zweiten Kollektor (22; 222) mit mindestens einer Reflexionsfläche (22.1, 22.2, 22.3), die geeignet ist, von der mindestens einen Lichtquelle (20.1, 20.2, 20.3; 220) des zweiten Lichtmotors (16; 216; 316) emittierte Lichtstrahlen in einen zweiten reflektierten Lichtstrahl zu reflektieren, und
- eine zweite optische Vorrichtung (24, 26; 124, 126; 224, 226), die geeignet ist, den zweiten reflektierten Lichtstrahl in einen zweiten projizierten Lichtstrahl zu projizieren;
**dadurch gekennzeichnet, dass**
das Beleuchtungsmodul (2; 102; 202) eine Platine (11; 111; 211) umfasst, die eine Neigung um einen Winkel α gegenüber einer horizontalen Ebene aufweist, um eine Neigungsachse (13; 113; 213), die horizontal und senkrecht zur optischen Achse (28; 128; 228) ist;
die ersten und zweiten Lichtmotoren (6, 18; 106; 118; 206; 218) auf der Platine (11; 111; 211) angeordnet sind, einer hinter dem anderen entlang einer Projektion der optischen Achse (28; 128; 228) auf die Platine (11; 111; 211), und jede der ersten und zweiten optischen Vorrichtungen eine Projektionslinse (14, 26; 114, 126; 214, 226) und einen Planspiegel (12, 24; 112, 224; 212, 224) umfasst, der geeignet ist, den entsprechenden ersten oder zweiten reflektierten Lichtstrahl zur entsprechenden Projektionslinse (14, 26; 114, 126; 214, 226) zurückzuwerfen.

2. Beleuchtungsmodul (2; 102; 202) nach Anspruch 1, bei dem die Planspiegel (12, 24; 112, 224; 212, 224) der ersten und zweiten optischen Vorrichtungen (12, 14; 24, 26; 112, 114; 124, 126; 212, 214; 224, 226) auf der Platine (11; 111; 211) angeordnet sind.

3. Beleuchtungsmodul (2; 102; 202) nach einem der Ansprüche 1 und 2, bei dem jeder der Planspiegel (12, 24; 112, 224; 212, 224) der ersten und zweiten optischen Vorrichtungen (12, 14; 24, 26; 112, 114; 124, 126; 212, 214; 224, 226) parallel zur Neigungsachse (13; 113; 213) ist.

4. Beleuchtungsmodul (2; 102; 202) nach einem der Ansprüche 1 bis 3, bei dem jeder der Planspiegel (12, 24; 112, 224; 212, 224) der ersten und zweiten optischen Vorrichtungen (12, 14; 24, 26; 112, 114; 124, 126; 212, 214; 224, 226) eine Neigung um einen Winkel β gegenüber einer Richtung senkrecht zu einer Ebene der Platine (11; 111; 211) aufweist.

5. Beleuchtungsmodul (2; 102; 202) nach einem der Ansprüche 1 bis 4, bei dem die Projektionslinsen (14; 26; 114, 126; 214, 226) der ersten und zweiten optischen Vorrichtungen (12, 14; 24, 26; 112, 114; 124, 126; 212, 214; 224, 226) sich entlang einer Hauptrichtung erstrecken, die eine Neigung um einen Winkel γ gegenüber der Vertikalen (28; 128; 228) aufweist.

6. Beleuchtungsmodul (2; 102; 202) nach einem der Ansprüche 1 bis 5, bei dem die Projektionslinsen (14; 26; 114, 126; 214, 226) der ersten und zweiten optischen Vorrichtungen (12, 14; 24, 26; 112, 114; 124, 126; 212, 214; 224, 226) benachbart und ausgerichtet sind.

7. Beleuchtungsmodul (2; 102; 202) nach einem der Ansprüche 1 bis 6, bei dem der Neigungswinkel α der Platine (11; 111; 211) größer als 0° und kleiner als 90° ist.

8. Beleuchtungsmodul (2; 102; 202) nach einem der Ansprüche 1 bis 7, bei dem jede der ersten und zweiten optischen Vorrichtungen (12, 14; 24, 26; 112, 114; 124, 126; 212, 214; 224, 226) dazu konfiguriert ist, einen Bereich der mindestens einen Reflexionsfläche (10.1, 10.2, 10.3, 22.1, 22.2, 22.3) des entsprechenden ersten oder zweiten Kollektors (10, 22) abzubilden, wobei der Bereich hinter der mindestens einen Lichtquelle (8.1, 8.2, 8.3, 20.1, 20.2, 20.3) des ersten oder zweiten Kollektors liegt.

9. Beleuchtungsmodul (2; 102; 202) nach einem der Ansprüche 1 bis 8, bei dem mindestens einer der ersten und zweiten projizierten Lichtstrahlen eine obere horizontale Abblendlinie aufweist.

10. Beleuchtungsmodul (2; 102; 202) nach einem der Ansprüche 1 bis 9, bei dem die mindestens eine Lichtquelle (8.1, 8.2, 8.3, 20.1, 20.2, 20.3; 208, 220) der ersten und zweiten Lichtmotoren (6, 18; 206, 218) in einer gemeinsamen Ebene auf der Platine (11; 111; 211) angeordnet sind.

11. Beleuchtungsmodul (102; 202) nach einem der Ansprüche 1 bis 10, umfassend ein drittes Teilmodul (130; 230) umfassend
- einen dritten Lichtmotor (132; 232), der auf der Platine (111; 211) hinter oder vor, entlang der Projektion der optischen Achse (128; 228) auf die Platine (111; 211), einem der ersten und zweiten Lichtmotoren (106, 118; 206, 218) angeordnet ist und mindestens eine Lichtquelle (134; 234), einen dritten Kollektor mit mindestens einer Reflexionsfläche (136; 236) umfasst, die geeignet ist, von der mindestens einen Lichtquelle (134; 234) des dritten Lichtmotors (132; 232) emittierte Lichtstrahlen in einen dritten reflektierten Lichtstrahl zu reflektieren, und
- eine dritte optische Vorrichtung (138, 140; 238, 240), die geeignet ist, den dritten reflektierten Lichtstrahl in einen dritten projizierten Lichtstrahl zu projizieren, und eine Projektionslinse (140; 240) sowie einen Planspiegel (138; 238) umfasst, der geeignet ist, den dritten reflektierten Lichtstrahl zur Projektionslinse (140; 240) der dritten optischen Vorrichtung (138, 140; 238, 240) zurückzuwerfen.

12. Beleuchtungsmodul (102; 202) nach Anspruch 11, bei dem die ersten, zweiten und dritten Lichtmotoren (106, 118, 132; 206; 218; 232) entlang einer Hauptrichtung ausgerichtet sind, die einer Projektion der optischen Achse (128; 228) auf die Platine (111; 211) entspricht.

13. Beleuchtungsmodul (202) nach einem der Ansprüche 11 und 12, umfassend ein viertes Teilmodul (242) umfassend
- einen vierten Lichtmotor (244), der auf der Platine (211) hinter oder vor, entlang der Projektion der optischen Achse (228) auf die Platine (211), einem der ersten, zweiten und dritten Lichtmotoren (206, 218, 232) angeordnet ist und mindestens eine Lichtquelle (246), einen vierten Kollektor (248) mit mindestens einer Reflexionsfläche umfasst, die geeignet ist, von der mindestens einen Lichtquelle (246) des vierten Lichtmotors (244) emittierte Lichtstrahlen in einen vierten reflektierten Lichtstrahl zu reflektieren, und
- eine vierte optische Vorrichtung (250, 252), die geeignet ist, den vierten reflektierten Lichtstrahl in einen vierten projizierten Lichtstrahl zu projizieren, und eine Projektionslinse (252) sowie einen Planspiegel (250) umfasst, der geeignet ist, den vierten reflektierten Lichtstrahl zur Projektionslinse (252) der vierten optischen Vorrichtung (250, 252) zurückzuwerfen.

14. Beleuchtungsmodul (2; 102; 202) nach einem der Ansprüche 1 bis 13, bei dem der erste projizierte Lichtstrahl, der zweite projizierte Lichtstrahl, gegebenenfalls der dritte projizierte Lichtstrahl und gegebenenfalls der vierte projizierte Lichtstrahl in Kombination einen globalen projizierten Lichtstrahl mit einer oberen horizontalen Abblendlinie bilden.

15. Kraftfahrzeugscheinwerfer umfassend ein Beleuchtungsmodul (2; 102; 202) nach einem der vorhergehenden Ansprüche.

## Claims

1. Lighting module (2; 102; 202) for a motor vehicle, said lighting module comprising:
an optical axis (28; 128; 228);
a first sub-module (4; 104; 204) comprising:
- a first light engine (6; 106; 206) comprising at least one light source (8.1, 8.2, 8.3; 208), a first collector (10; 210) with at least one reflective surface (10.1, 10.2, 10.3); capable of reflecting light rays emitted by the at least one light source (8.1, 8.2, 8.3; 208) of the first light engine (6; 106; 206) into a first reflected light beam, and
- a first optical device (12, 14; 112, 114; 212, 214) capable of projecting the first reflected light beam into a first projected light beam; and
a second sub-module (16; 216; 316) comprising
- a second light engine (18; 118; 218) comprising at least one light source (20.1, 20.2, 20.3; 220), a second collector (22; 222) with at least one reflective surface (22.1, 22.2, 22.3) capable of reflecting light rays emitted by the at least one light source (20.1, 20.2, 20.3; 220) of the second light engine (16; 216; 316) into a second reflected light beam, and
- a second optical device (24, 26; 124, 126; 224, 226) capable of projecting the second reflected light beam into a second projected light beam;
**characterized in that**
the lighting module (2; 102; 202) comprises a plate (11; 111; 211) presenting an inclination of an angle α with respect to a horizontal plane, about an inclination axis (13; 113; 213) that is horizontal and perpendicular to the optical axis (28; 128; 228);
the first and second light engines (6, 18; 106; 118; 206; 218) are arranged on the plate (11; 111; 211), one behind the other along a projection of the optical axis (28; 128; 228) onto the plate (11; 111; 211), and each of the first and second optical devices comprises a projection lens (14, 26; 114, 126; 214, 226) and a flat mirror (12, 24; 112, 224; 212, 224) capable of redirecting the corresponding first or second reflected light beam towards the corresponding projection lens (14, 26; 114, 126; 214, 226).

2. Lighting module (2; 102; 202) according to claim 1, wherein the flat mirrors (12, 24; 112, 224; 212, 224) of the first and second optical devices (12, 14; 24, 26; 112, 114; 124, 126; 212, 214; 224, 226) are arranged on the plate (11; 111; 211).

3. Lighting module (2; 102; 202) according to one of claims 1 and 2, wherein each of the flat mirrors (12, 24; 112, 224; 212, 224) of the first and second optical devices (12, 14; 24, 26; 112, 114; 124, 126; 212, 214; 224, 226) is parallel to the inclination axis (13; 113; 213).

4. Lighting module (2; 102; 202) according to one of claims 1 to 3, wherein each of the flat mirrors (12, 24; 112, 224; 212, 224) of the first and second optical devices (12, 14; 24, 26; 112, 114; 124, 126; 212, 214; 224, 226) presents an inclination of an angle β with respect to a direction perpendicular to a plane of the plate (11; 111; 211).

5. Lighting module (2; 102; 202) according to one of claims 1 to 4, wherein the projection lenses (14; 26; 114, 126; 214, 226) of the first and second optical devices (12, 14; 24, 26; 112, 114; 124, 126; 212, 214; 224, 226) extend along a main direction presenting an inclination of an angle γ with respect to the vertical (28; 128; 228).

6. Lighting module (2; 102; 202) according to one of claims 1 to 5, wherein the projection lenses (14; 26; 114, 126; 214, 226) of the first and second optical devices (12, 14; 24, 26; 112, 114; 124, 126; 212, 214; 224, 226) are adjacent and aligned.

7. Lighting module (2; 102; 202) according to one of claims 1 to 6, wherein the inclination angle α of the plate (11; 111; 211) is greater than 0° and less than 90°.

8. Lighting module (2; 102; 202) according to one of claims 1 to 7, wherein each of the first and second optical devices (12, 14; 24, 26; 112, 114; 124, 126; 212, 214; 224, 226) is configured to image a zone of the at least one reflective surface (10.1, 10.2, 10.3, 22.1, 22.2, 22.3) of the corresponding first or second collector (10, 22), said zone being located at the rear of the at least one light source (8.1, 8.2, 8.3, 20.1, 20.2, 20.3) of said first or second collector.

9. Lighting module (2; 102; 202) according to one of claims 1 to 8, wherein at least one of the first and second projected beams presents an upper horizontal cut-off.

10. Lighting module (2; 102; 202) according to one of claims 1 to 9, wherein the at least one light source (8.1, 8.2, 8.3, 20.1, 20.2, 20.3; 208, 220) of the first and second light engines (6, 18; 206, 218) are arranged in a same plane on the plate (11; 111; 211).

11. Lighting module (102; 202) according to one of claims 1 to 10, comprising a third sub-module (130; 230) comprising
- a third light engine (132; 232) arranged on the plate (111; 211) at the rear or front, along the projection of the optical axis (128; 228) onto the plate (111; 211), of one of the first and second light engines (106, 118; 206, 218) and comprising at least one light source (134; 234), a third collector with at least one reflective surface (136; 236) capable of reflecting light rays emitted by the at least one light source (134; 234) of the third light engine (132; 232) into a third reflected light beam, and
- a third optical device (138, 140; 238, 240) capable of projecting the third reflected light beam into a third projected beam and comprising a projection lens (140; 240) and a flat mirror (138; 238) capable of redirecting the third reflected light beam towards the projection lens (140; 240) of the third optical device (138, 140; 238, 240).

12. Lighting module (102; 202) according to claim 11, wherein the first, second and third light engines (106, 118, 132; 206; 218; 232) are aligned along a main direction corresponding to a projection of the optical axis (128; 228) onto the plate (111; 211).

13. Lighting module (202) according to one of claims 11 and 12, comprising a fourth sub-module (242) comprising
- a fourth light engine (244) arranged on the plate (211) at the rear or front, along the projection of the optical axis (228) onto the plate (211), of one of the first, second and third light engines (206, 218, 232) and comprising at least one light source (246), a fourth collector (248) with at least one reflective surface capable of reflecting light rays emitted by the at least one light source (246) of the fourth light engine (244) into a fourth reflected light beam, and
- a fourth optical device (250, 252) capable of projecting the fourth reflected light beam into a fourth projected beam and comprising a projection lens (252) and a flat mirror (250) capable of redirecting the fourth reflected light beam towards the projection lens (252) of the fourth optical device (250, 252).

14. Lighting module (2; 102; 202) according to one of claims 1 to 13, wherein the first projected light beam, the second projected light beam, where applicable the third projected light beam and, where applicable, the fourth projected light beam together form a combined overall projected light beam with an upper horizontal cut-off.

15. Motor vehicle headlamp comprising a lighting module (2; 102; 202) according to one of the preceding claims.
